(19) **Europäisches Patentamt**

**European Patent Office**

**Office européen des brevets**

(11) **EP 1 295 503 B1**

(12) **EUROPÄISCHE PATENTSCHRIFT**

(45) Veröffentlichungstag und Bekanntmachung des Hinweises auf die Patenterteilung:
**10.03.2004 Patentblatt 2004/11**

(51) Int Cl.7: **H04Q 7/38**

(21) Anmeldenummer: **01984080.0**

(22) Anmeldetag: **26.06.2001**

(86) Internationale Anmeldenummer:
**PCT/DE2001/002345**

(87) Internationale Veröffentlichungsnummer:
**WO 2002/001901 (03.01.2002 Gazette 2002/01)**

(54) **VERFAHREN ZUR SIGNALISIERUNG VON INFORMATIONEN IN EINEM FUNK-KOMMUNIKATIONSSYSTEM**

METHOD FOR SIGNALLING INFORMATION IN A RADIOCOMMUNICATION SYSTEM

PROCEDE DE SIGNALISATION D'INFORMATIONS DANS UN SYSTEME DE RADIOCOMMUNICATION

(84) Benannte Vertragsstaaten:
**AT BE CH CY DE DK ES FI FR GB GR IE IT LI LU MC NL PT SE TR**

(30) Priorität: **26.06.2000 DE 10031065**

(43) Veröffentlichungstag der Anmeldung:
**26.03.2003 Patentblatt 2003/13**

(73) Patentinhaber: **SIEMENS AKTIENGESELLSCHAFT 80333 München (DE)**

(72) Erfinder: **PURAT, Marcus 12209 Berlin (DE)**

(56) Entgegenhaltungen:
**EP-A- 1 063 806**      **WO-A-00/05844**
**WO-A-99/00827**      **US-A- 5 642 354**

EP 1 295 503 B1

**Beschreibung**

Die Erfindung betrifft ein Verfahren zur Signalisierung von Informationen in einem Funk-Kommunikationssystem. Die Erfindung ist insbesondere für einen Einsatz in einem Mobilfunk- oder drahtlosen Teilnehmeranschlußsystem geeignet.

In Funk-Kommunikationssystemen, beispielsweise dem europäischen Mobilfunksystem der zweiten Generation GSM (Global System for Mobile Communications), werden Informationen (beispielsweise Sprache, Bildinformation oder andere Daten) mit Hilfe von elektromagnetischen Wellen über eine Funkschnittstelle übertragen. Die Funkschnittstelle bezieht sich auf eine Verbindung zwischen einer Basisstation und Teilnehmerstationen, wobei die Teilnehmerstationen Mobilstationen oder ortsfeste Funkstationen sein können. Das Abstrahlen der elektromagnetischen Wellen erfolgt dabei mit Trägerfrequenzen, die in einem für das jeweilige System vorgesehenen Frequenzband liegen. Für zukünftige Funk-Kommunikationssysteme, beispielsweise das UMTS (Universal Mobile Telecommunication System) oder andere Systeme der 3. Generation sind Frequenzen im Frequenzband von ca. 2000 MHz vorgesehen. Für die dritte Mobilfunkgeneration sind zwei Modi vorgesehen, wobei ein Modus einen FDD-Betrieb (frequency division duplex) und der andere Modus einen TDD-Betrieb (time division duplex) bezeichnet. Diese Modi finden in jeweils unterschiedlichen Frequenzbändern ihre Anwendung. Beide Modi unterstützen ein sogenanntes CDMA-Teilnehmerseparierungsverfahren (Code Division Multiple Access).

Die abgestrahlten elektromagnetischen Wellen werden aufgrund von Verlusten durch Reflexion, Beugung und dergleichen gedämpft. Infolgedessen sinkt die Empfangsleistung, die bei der empfangenden Teilnehmerstation zur Verfügung steht. Diese Dämpfung ist ortsabhängig und bei sich bewegenden Teilnehmerstationen auch zeitabhängig. Bei einer Mehrwegeausbreitung kommen mehrere Signalkomponenten unterschiedlich verzögert bei der empfangenden Funkstation an. Die geschilderten Einflüsse beschreiben den verbindungsindividuellen Übertragungskanal.

Aus WO 99/08401 ist bekannt, wie eine Kanalschätzung basierend auf der Auswertung übertragener und im Empfänger vorbekannter Kanalmeßsequenzen die Eigenschaften des verbindungsindividuellen Übertragungskanals bestimmt. Dies geschieht durch einen Vergleich der vorbekannten gespeicherten Kanalmeßsequenz und der empfangenen, durch den Übertragungskanal verzerrten Kanalmeßsequenz. Das Ergebnis der Kanalschätzung ist eine Kanalimpulsantwort.

Aus dem Artikel von J. Mayer, J. Schlee, T. Weber "Protocol and Signalling Aspects of Joint Detection CDMA", PIMRC'97, Helsinki, 1997, Seiten 867-871, ist unter anderem bekannt, daß in einer Funkstation empfangsseitig zur Detektion von Signalen einer Kommunikationsverbindung nicht nur ein der eigenen Kommunikationsverbindung zugeteilter Spreizkode, sondern zusätzlich parallelen Kommunikationsverbindungen zugeteilte Spreizkodes verwendet werden. Hierbei ist die empfangende Funkstation vorteilhaft in Kenntnis der aktuell zugewiesenen Spreizkodes, um eine Verschlechterung der Empfangsqualität aufgrund einer Detektion von aktuell nicht vorhandenen Signalen bzw. nicht zugeteilten Spreizkodes zu vermeiden.

Aus US-A-5642354 ist es bekannt, wie eine Anzahl von Meßsequenzen, (von denen jede eine verschiedene Nachricht darstellt, dazu dient zusätzliche Informationen in einem Zeitrahmen zu übertragen. Acht verschiedene Meßsequenzen können verwendet werden, um numerische oder bezannte Nachrichten (z.B. power control information) zu übertragen.

Der Erfindung liegt die Aufgabe zugrunde, ein Verfahren anzugeben, das eine einfache Signalisierung von Informationen ermöglicht.

Diese Aufgabe wird durch das Verfahren mit den Merkmalen des Anspruchs 1 und durch die Funkstation des Anspruchs 15 zur Durchführung des Verfahrens gelöst. Vorteilhafte Weiterbildungen der Erfindung sind den abhängigen Ansprüchen zu entnehmen.

Erfindungsgemäß werden in einem Funk-Kommunikationssystem von einer ersten Funkstation Informationen codiert durch eine Auswahl und/oder Anzahl von Kanalmeßsequenzen zu einer zweiten Funkstation signalisiert, wobei die Kanalmeßsequenzen zusätzlich durch eine Phaseninformation unterscheidbar sind.

Durch das erfindungsgemäße Verfahren, welches Kombinationen von Kanalmeßsequenzen zur Signalisierung verwendet, können von einer ersten Funkstation, beispielsweise einer Basisstation, Informationen an zweite Funkstationen, z.B. Teilnehmerstationen, übertragen werden, ohne dass hierfür zusätzliche Datenbits auf spezifischen Signalisierungskanälen erforderlich wären.

Die erfindungsgemäße Ausgestaltung ermöglicht in einfacher Weise eine Signalisierung von Informationen, beispielsweise wieviele Spreizkodes aktuell zugeteilt sind, zu der zweiten Funkstation. Da die Signalisierung mittels einer Auswahl und/oder Anzahl der zur Verfügung stehenden Kanalmeßsequenzen erfolgt, sind keine zusätzlichen Signalisierungen auf spezifischen Signalisierungskanälen oder Anpassungen bzw. Veränderungen an den Kanalmeßsequenzen erforderlich. Mittels der ihr per se bekannten möglichen Kanalmeßsequenzen kann die zweite Funkstation die von der ersten Funkstation aktuell gesendeten Kanalmeßsequenzen und durch deren erfindungsgemäße jeweilige Anzahl bzw. Kombination implizierte Kodierung die aktuelle Anzahl zugeteilter Spreizkodes ermitteln, um nachfolgend eine optimale Detektion durchzuführen.

Nach einer vorteilhaften Weiterbildung der Erfindung weisen die teilnehmerspezifischen Informationen, wie z.B. die Anzahl der in einer Funkzelle der Ersten Funkstation zugeteilten Spreizcodes, verschiedene Werte auf und es sind jeweils einer Auswahl und/oder Anzahl von Kanalmeßsequenzen ein oder mehrere Werte der teilnehmerspezifischen Informationen zugeordnet und werden zu der Teilnehmerstation signalisiert.

Auf diese Weise kann auch bei einer nicht ausreichenden Anzahl von Kanalmeßsequenzen eine Signalisierung erfolgen, die z.B. die mögliche Anzahl der aktiven Spreizcodes wesentlich einschränkt. Die Zuordnung kann auch dahingehend erfolgen, dass die Differenz der Werte der zugeordneten teilnehmerspezifischen Informationen maximal und/oder konstant ist, so dass Detektionsfehler weniger wahrscheinlich sind.

Nach einer vorteilhaften Weiterbildung der Erfindung wird die Menge der Kanalmeßsequenzen durch eine zyklische Ableitung von einer oder mehreren Grundsequenzen gebildet. Hierdurch wird unter anderem eine gleichzeitige gemeinsame Kanalschätzung für mehrere Übertragungskanäle möglich, wenn deren Kanalmeßsequenzen von der gleichen Grundsequenz abgeleitet wurden.

Das erfindungsgemäße Verfahren wird gemäß einer weiteren Weiterbildung der Erfindung besonders vorteilhaft in Funk-Kommunikationssystemen mit einem beschriebenen Joint-Detection-Verfahren durchgeführt.

Einer weiteren Weiterbildung der Erfindung zufolge wird die Anzahl Kanalmeßsequenzen zur Signalisierung der Anzahl zugeteilter Spreizkodes minimiert. Die Anzahl der verwendeten Kanalmeßsequenzen wird dabei vorteilhaft nach der maximalen Anzahl zuteilbarer Spreizkodes gewählt. So lassen sich beispielsweise durch Kombinationen von vier Kanalmeßsequenzen fünfzehn unterschiedliche Mengen von zugeteilten Spreizkodes definieren.

Besonders vorteilhaft wird das beschriebene erfindungsgemäße Verfahren in einem als ein Mobilfunksystem oder drahtlosen Teilnehmeranschlußsystem verwirklichten Funk-Kommunikationssystem eingesetzt.

Ausführungsbeispiele der Erfindung werden anhand der beiliegenden Zeichnungen näher erläutert.

Dabei zeigen

FIG 1 ein Blockschaltbild eines Funk-Kommunikationssystems,

FIG 2 eine schematische Darstellung der Rahmenstruktur einer Funkschnittstelle mit einem TD/CDMA-Teilnehmerseparierungsverfahren,

FIG 3 eine Tabelle mit einer durch Auswahl und Kombinationen von Kanalmeßsequenzen jeweils kodierte Anzahl zugeteilter Spreizkodes,

FIG 4 eine schematische Darstellung einer Übertragung einer Kanalmeßsequenz nach dem Stand der Technik,

FIG 5 eine schematische Darstellung einer Übertragung einer Kombination mehrerer Kanalmeßsequenzen, und

FIG 6 eine schematische Darstellung einer Übertragung einer Kombination von Kanalmeßsequenzen unter Verwendung einer zusätzlichen Phaseninformation.

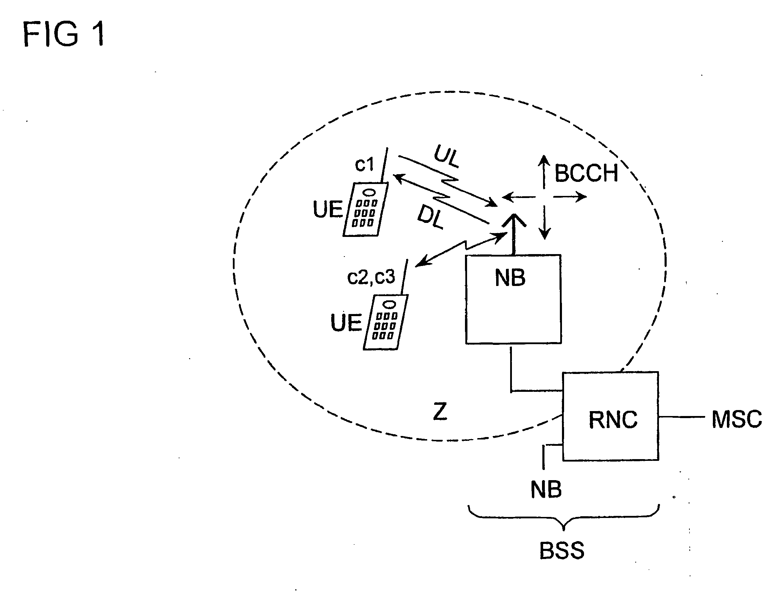

Die FIG 1 zeigt einen Teil eines Mobilfunksystems als Beispiel für die Struktur eines Funk-Kommunikationssystems. Ein Mobilfunksystem besteht jeweils aus einer Vielzahl von Mobilvermittlungsstellen MSC, die zu einem Vermittlungsnetz (SSS - Switching Subsystem) gehören und untereinander vernetzt sind bzw. den Zugang zu einem Festnetz herstellen, und aus jeweils einem oder mehreren mit diesen Mobilvermittlungsstellen MSC verbundenen Basisstationssystemen BSS (BSS - Base Station Subsystem). Ein Basisstationssystem BSS weist wiederum zumindest eine Einrichtung RNC (RNC - Radio Network Controller) zum Zuweisen von funktechnischen Ressourcen sowie zumindest eine jeweils damit verbundene Basisstation NB (NB - Node B) auf.

Eine Basisstation NB kann über eine Funkschnittstelle Verbindungen zu Teilnehmerstationen UE (UE - User Equipment) aufbauen. Durch jede Basisstation NB wird zumindest eine Funkzelle Z gebildet. Die Größe der Funkzelle Z wird in der Regel durch die Reichweite eines Organisationskanals (BCCH - Broadcast Control Channel), der von den Basisstationen NB mit einer jeweils maximalen und konstanten Sendeleistung gesendet wird, bestimmt. Bei einer Sektorisierung oder bei hierarchischen Zellstrukturen können pro Basisstation NB auch mehrere Funkzellen Z versorgt werden. Die Funktionalität dieser Struktur ist auf andere Funk-Kommunikationssysteme übertragbar, in denen die Erfindung zum Einsatz kommen kann.

Das Beispiel der FIG 1 zeigt zwei Teilnehmerstationen UE, die sich in der Funkzelle Z der Basisstation NB befinden. Die Mobilstationen UE haben jeweils eine Kommunikationsverbindung zu der Basisstation NB aufgebaut, auf der in Aufwärts- UL und Abwärtsrichtung DL eine Signalübertragung eines gewählten Dienstes erfolgt. Die Kommunikationsverbindungen werden durch den Teilnehmerstationen UE zugeteilte unterschiedliche Spreizcodes $c_1$, $c_2$, $c_3$ separiert, wobei die Teilnehmerstationen UE jeweils alle aktuell zugeteilten Spreizcodes $c_1$, $c_2$, $c_3$ für den Empfang der Signale der eigenen Kommunikationsverbindung gemäß dem beschriebenen Joint-Detection-Verfahren nutzen. Während der Verbindung werten die Teilnehmerstationen UE und die Basisstation NB weiterhin periodisch Übertragungseigenschaften der Funkschnittstelle per Kanalschätzung aus.

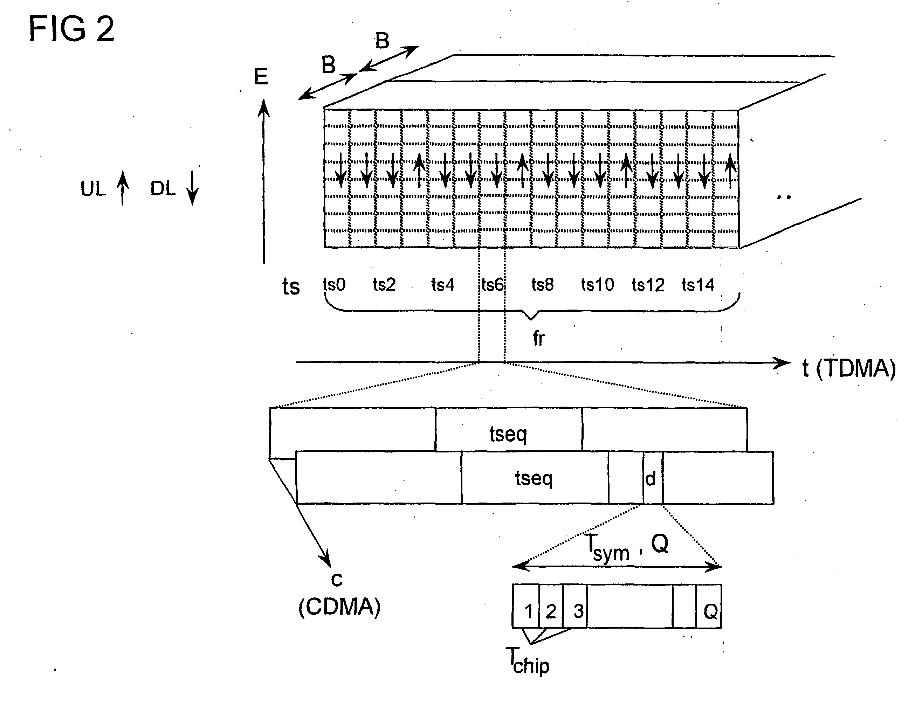

Die Rahmenstruktur der Funkübertragung im TDD-Modus des UMTS-Mobilfunksystems, in der das erfindungsgemäße Verfahren vorteilhaft einsetzbar ist, ist aus der FIG 2 ersichtlich. Gemäß einer TDMA-Komponente ist eine Aufteilung eines breitbandigen Frequenzbereiches in mehrere Zeitschlitze ts gleicher Zeitdauer, beispielsweise 15 Zeitschlitze ts0 bis ts14 vorgesehen, die einen Zeitrahmen fr bilden. Ein Zeitschlitz ts ist für einen Kanal RACH mit wahlfreien Vielfachzugriff zugeteilt.

Ein Frequenzband B erstreckt sich über einen bestimmten Frequenzbereich. Ein Teil der Zeitschlitze wird für die Signalübertragung in Abwärtsrichtung DL und ein Teil der Zeitschlitze in Aufwärtsrichtung UL genutzt. Beispielhaft ist ein Asymmetrieverhältnis von 3:1 zugunsten der Abwärtsrichtung DL gezeigt. Bei diesem TDD-Übertragungsverfahren entspricht das Frequenzband B für die Aufwärtsrichtung UL dem Frequenzband B für die Abwärtsrichtung DL. Gleiches wiederholt sich für weitere Trägerfrequenzen. Durch die variable Zuordnung der Zeitschlitze ts für Auf- oder Abwärtsrichtung UL, DL können vielfältige asymmetrische Ressourcenzuteilungen vorgenommen werden.

Innerhalb der Zeitschlitze ts werden Informationen mehrerer Verbindungen in Funkblöcken übertragen. Die Daten d sind verbindungsindividuell mit einer Feinstruktur, einem Spreizkode c, gespreizt, so daß empfangsseitig beispielsweise n Verbindungen durch diese CDMA-Komponente (code division multiple access) separierbar sind. Die Spreizung von einzelnen Symbolen der Daten d bewirkt, daß innerhalb der Symboldauer $T_{sym}$ Q Chips der Dauer $T_{chip}$ übertragen werden. Die Q Chips bilden dabei den verbindungsindividuellen Spreizkode c. In den Funkblöcken ist weiterhin eine Kanalmeßsequenz tseq angeordnet, der wie beschrieben einer Kanalschätzung dient.

Die verwendeten Parameter der Funkschnittstelle für beide Übertragungsmodi sind vorteilhafterweise:

| | |
|---|---|
| Chiprate | 3,84 Mcps |
| Rahmendauer | 10 ms |
| Anzahl Zeitschlitze | 15 |
| Dauer eines Zeitschlitzes | 666 ps |
| Spreizfaktor | variabel |
| Modulationsart | QPSK |
| Bandbreite | 5 MHz |
| Frequenzwiederholungswert | 1 |

Diese Parameter ermöglichen eine bestmögliche Harmonisierung für TDD- und des FDD-Modus (FDD frequency division duplex) für die 3. Mobilfunkgeneration.

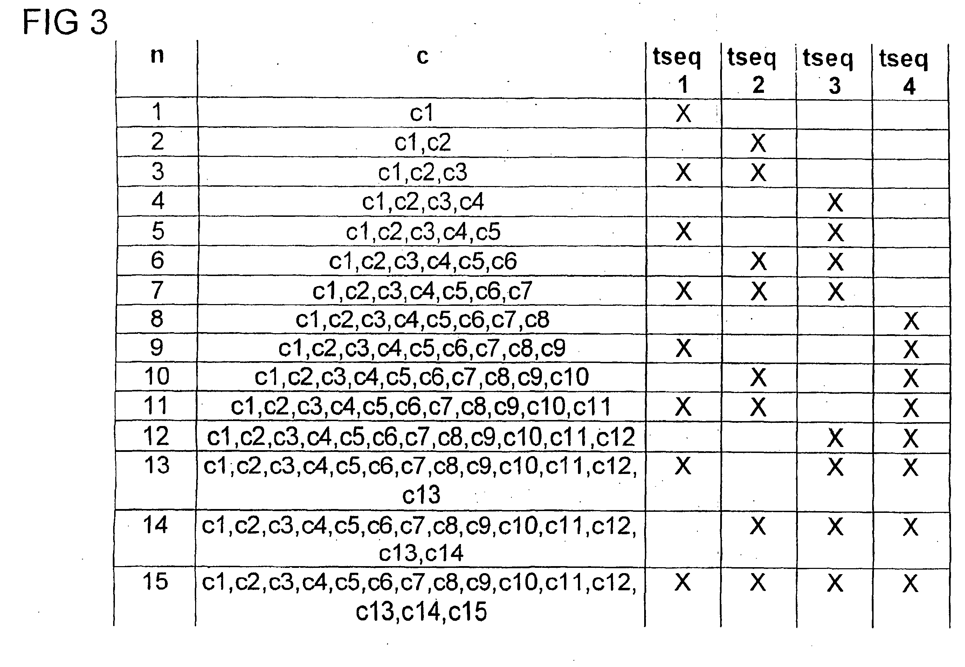

In der FIG 3 ist eine Tabelle dargestellt, die beispielhaft die erfindungsgemäße Signalisierung der aktuellen Anzahl n zugeteilter Spreizkodes c mittels einer Auswahl und/oder Anzahl von Kanalmeßsequenzen tseq offenbart. Bei einer Verwendung von vier Kanalmeßsequenzen tseq1...tseq4 sind 15 unterschiedlichen Mengen von zugeteilten Spreizkodes c darstellbar. In dem angegebenen Beispiel stehen 15 Spreizkodes c1...c15 zur Verfügung, wobei die Zuteilung der Spreizkodes c zu Kommunikationsverbindungen sukzessiv durchgeführt wird. In der Art einer binären Kodierung werden zur Darstellung einer bestimmten Anzahl n aktuell zugeteilter Spreizkodes c verschiedene Kanalmeßsequenzen tseq und Kombinationen mehrerer Kanalmeßsequenzen tseq verwendet. Nach dem in der FIG 1 dargestellten Beispiel wird nach der Tabelle der FIG 3 von der Basisstation NB die erste tseq1 und die zweite Kanalmeßsequenz tseq2 gesendet, da diese Kombination die aktuelle Zuteilung der Spreizkodes c1, c2 und c3 in der Funkzelle Z der Basisstation NB repräsentiert. Die Teilnehmerstationen UE werten permanent die aktuell gesendeten Kanalmeßsequenzen tseq aus, da sie per se in Kenntnis der Anzahl und den Inhalt der Kanalmeßsequenzen tseq sind. Sie können hierdurch in einfacher Weise detektieren, welche Kanalmeßsequenzen tseq aktuell von der Basisstation NB gesendet werden und hieraus wie beschrieben Rückschlüsse auf die aktuelle Anzahl zugeteilter Spreizkodes c ziehen. Die Parameter der Anzahl möglicher Kanalmeßsequenzen und deren Inhalt können von Funkzelle zu Funkzelle des Funk-Kommunikationssystems unterschiedlich sein und werden in der Regel den Teilnehmerstationen signalisiert.

Neben der bereits beschriebenen Signalisierung der aktuellen Anzahl n zugeteilter Spreizkodes c können auch beliebige andere teilnehmerspezifische Informationen durch eine Kombination verschiedener Kanalmeßsequenzen tseq der Teilnehmerstation UE signalisiert werden. Es lässt sich beispielsweise den verschiedenen Teilnehmerstationen UE jeweils eine individuelle Teilnehmeridentifikation TI zuordnen, welche aus einer Kombination verschiedener Kanalmeßsequenzen tseq gebildet wird. Zur effizienten paketorientierten Datenübertragung in Mobilfunknetzen können beispielsweise sogenannte "shared channels" eingesetzt werden. Verschiedenen Teilnehmerstationen UE werden diese Kanäle je nach Bedarf zugeteilt. Diese sich ständig verändernde Zuteilung muß möglichst schnell erfolgen (d.h. am besten in der physikalischen Schicht), damit eine effiziente Ressourcenauslastung gegeben ist.

Unterschiedliche Teilnehmerstationen UE bekommen bei der Konfiguration des "shared channels" unterschiedliche Kombinationen von Kanalmeßsequenzen tseq als individuelle Teilnehmeridentifikation TI zugeordnet (über Signalisierungsmethoden in höheren Schichten). Im Betrieb des "shared channels" wird dann jeweils die Kombination von Kanalmeßsequenzen tseq, d.h. die individuelle Teilnehmeridentifikation TI ausgesendet, die der Teilnehmerstation UE zugeordnet ist, für den im Moment Daten gesendet werden.

Die Kombination von Kanalmeßsequenzen tseq kann der Teilnehmerstation UE beispielsweise über eine einfache Binärcodierung zugeordnet werden. Zur Erhöhung der Zuverlässigkeit kann jedoch auch ein beliebiger redundanter Code eines Kanalcodierungsverfahrens (z.B. BCH-Code) eingesetzt werden. Dadurch läßt sich bei vorgegebener Maximalanzahl von Kanalmeßsequenzen tseq die Anzahl der identifizierbaren Teilnehmerstationen UE erhöhen. Im UTRA-TDD System sind beispielsweise 8 Kanalmeßsequenzen tseq vorgesehen. Durch Kombination der Kanalmeßsequenzen tseq und einen einfachen binären Code können 127 Teilnehmerstationen UE identifiziert werden.

Die Kodierung von teilnehmerspezifischen Informationen mittels Kombinationen von Kanalmeßsequenzen tseq kann auch dazu verwendet werden, die Leistung eines Senders, im Uplink z.B. der Teilnehmerstation UE, mittels eines Empfängers, beispielsweise der Basisstation NB, zu regeln (Power-Control-Loop). Auch im Downlink ist eine derartige Signalisierung denkbar.

Hierzu steuert der Empfänger, z.B. die Basisstation NB, die Sendeleistung durch die Übertragung eines Signalisierungsbits (TPC, transmit power control) in der physikalischen Schicht. Der Sender, z.B. die Teilnehmerstation UE, ändert seine Sendeleistung in Abhängigkeit des TPC-Bits (0 beziehungsweise 1) um eine vorgegebene Schrittweite ?P nach oben oder nach unten. Die Kombination der Kanalmeßsequenzen tseq kann verschiedenen Schrittweiten $\Delta P$ der Sendeleistungsänderung zugeordnet werden. Die optimale Schrittweite $\Delta P$ hδngt dabei von veränderlichen Größen wie beispielsweise den Kanaleigenschaften, der Geschwindigkeit des Empfängers oder auch der Übertragungsrate des TPC-Bits ab. Eine schnelle Änderung der Schrittweite $\Delta P$ ist daher wónschenswert.

Die Zuordnung kann folgendermaßen ausgestaltet sein (bei Verwendung zweier Kanalmeßsequenzen tseq1, tseq2):

| Schrittweite (in dB) | tseq 1 | tseq 2 |
|:---:|:---:|:---:|
| 1 | X | |
| 2 | | X |
| 3 | X | X |

Es ist auch denkbar, dass die Anzahl der zu signalisierenden Werte, z.B. die Anzahl der verwendeten CDMA-Codes, höher ist als die Anzahl der möglichen Kombinationen von Kanalmeßsequenzen tseq, weil z.B. nicht genügend Kanalmeßsequenzen tseq zur Verfügung stehen. In diesem Fall können einer Kombination von Kanalmeßsequenzen tseq mehrere in Frage kommende Anzahlen von CDMA-Codes zugeordnet werden. Die Teilnehmerstation UE muß danach in einem weiteren Schritt die Anzahl der tatsächlich aktiven CDMA-Codes ermitteln. Dies geschieht beispielsweise durch Korrelation mit sämtlichen Codesequenzen und anschließender Schwellwertentscheidung.

Jedoch kann es aufgrund von additivem Rauschen und Kreuzkorrelationen zu Fehldetektionen kommen, d. h. es wird eine unrichtige Anzahl aktiver CDMA-Codes bestimmt. Um die Zahl der Fehlentscheidungen möglichst gering zu halten, wird erfindungsgemäß das Zuordnungsschema der Kombinationen der Kanalmeßsequenzen tseq zu der Anzahl der verwendeten CDMA-Codes derart gewählt, dass die Differenz der jeweiligen Anzahlen der CDMA-Codes, die durch eine Kombination von Kanalmeßsequenzen tseq, ein sogenanntes Codewort, abgebildet werden, maximal ist. Es ist ferner vorteilhaft, wenn die Differenz der jeweiligen Anzahlen von CDMA-Codes bei allen Codewörtern möglichst gleich ist.

Ein derartiges Zuordnungsschema kann beispielsweise folgendermaßen aussehen:

Anzahl der Kanalmeßsequenzen tseq: 3
Anzahl der Codeworte: 7
Anzahl CDMA-Codes: 16

| Codewort | Codewort (binär) | | | Anzahl aktiver Codes |
|:---:|:---:|:---:|:---:|:---:|
| | tseq 1 | tseq 2 | tseq 3 | |
| 1 | | | X | 1 oder 8 oder 15 |
| 2 | | X | | 2 oder 9 oder 16 |
| 3 | | X | X | 3 oder 10 |
| 4 | X | | | 4 oder 11 |
| 5 | X | | X | 5 oder 12 |
| 6 | X | X | | 6 oder 13 |
| 7 | X | X | X | 7 oder 14 |

In diesem ausgewählten Fall beträgt die Differenz der Anzahl der CDMA-Codes für alle Codewörter konstant 7. Je nach Anzahl der verwendeten Kanalmeßsequenzen tseq und der Anzahl der verwendeten CDMA-Codes können jedoch auch andere Zuordnungen als die obenstehende gewählt werden. Insbesondere können auch anstelle des hier gewählten binären Codes beliebige redundante Codes eingesetzt werden.

Eine Zuordnung, wie in obenstehender Tabelle abgebildet, ist erfindungsgemäß nicht auf die Darstellung aktiver CDMA-Codes beschränkt, sondern kann für beliebige teilnehmerspezifische Informationen, wie z.B. Informationen zur Leistungsregelung oder zur Teilnehmeridentifikation eingesetzt werden.

Um eine Kanalschätzung nicht zu verschlechtern, werden bei Verwendung einer Kombination von mehreren Trainingssequenzen entsprechend obiger Beschreibung die einzelnen Kanalschätzungen kohärent addiert. Bei vorausgesetzt konstanter Summenleistung ist im Idealfall damit das Ergebnis der Kanalschätzung dasselbe wie bei Verwendung einer einzelnen Kanalmeßsequenz. In einer realen Implementation verschlechtert sich die Kanalschätzung jedoch aufgrund von Quantisierungseffekten und Schwellwerteffekten, die sich bei der kleineren Leistung jeder einzelnen Kanalmeßsequenz stärker auswirken. Daher sollte die Anzahl der zur Signalisierung verwendeten Kanalmeßsequenzen nicht zu groß sein. Damit ist der Umfang der möglichen Codeworte für die Signalisierung unmittelbar beschränkt durch die Anzahl der Kanalmeßsequenzen. Da wenigstens eine Kanalmeßsequenz aktiv sein muß, ergibt sich die Anzahl der Codeworte $N_C$ aus der Anzahl der Kanalmeßsequenzen $N_{seq}$ wie folgt:

$$N_C = 2^{N_{seq}} - 1$$

Diese als 'On-Off'-Signalisierung bezeichenbare Signalisierung wird erfindungsgemäß um eine Phaseninformation erweitert. Eine Kanalmeßsequenz bildet dabei die Referenzphase, so dass die Phase der geschätzten Kanalimpulsantwort mit der Phase des Funkkanals übereinstimmt. Alle übrigen Kanalmeßsequenzen werden mit einem Phasenversatz, einem sogenannten Phasenoffset, zu dieser Referenzphase gesendet. Da voraussetzungsgemäß alle Kanalmeßsequenzen dieselbe Kanalschätzung liefern sollten, kann die empfangene Phasendifferenz nur durch die Phasendrehung der Kanalimpulsantwort entstanden sein. Phasendrehungen unterliegen im Empfänger weniger dem Einfluß von Quantisierung und Schwellwertbildung als Leistungsänderungen.

In einem beschriebenen Mobilfunksystem werden die Kanalmeßsequenzen beispielsweise dazu verwendet, die Anzahl der belegten CDMA Spreizcodes anzuzeigen, wobei dabei beispielsweise 16 Spreizcodes maximal möglich sind. Unter Verwendung von gleichzeitig maximal drei Kanalmeßsequenzen ergibt sich bei bekannter 'On-Off'-Signalisierung folgende Signalisierungsmöglichkeit:

| Verwendete Kanalmeßsequenz | Anzahl der Spreizcodes |
|---|---|
| 1 | 1 oder 2 |
| 2 | 3 oder 4 |
| 3 | 5 oder 6 |
| 1, 2 | 7 oder 8 |
| 1, 3 | 9 oder 10 |
| 2, 3 | 11, 12 oder 13 |
| 1, 2, 3 | 14, 15 oder 16 |

Durch die erfindungsgemäße Hinzunahme einer Phaseninformation läßt sich mit bereits gleichzeitig maximal zwei Kanalmeßsequenzen die Signalisierungsmöglichkeit sowie deren Effizienz verbessern:

| Verwendete Kanalmeßsequenz | Anzahl der Spreizcodes |
|---|---|
| 1 | 1 oder 2 |
| 2 | 3 oder 4 |
| 3 | 5 oder 6 |
| 1, 2 | 7 oder 8 |
| 1, 3 | 9 oder 10 |
| 2, 3 | 11 oder 12 |

(fortgesetzt)

| Verwendete Kanalmeßsequenz | Anzahl der Spreizcodes |
|---|---|
| 1, -2 | 13 oder 14 |
| 1, -3 | 15 oder 16 |

Hierbei steht die Kanalmeßsequenz -n für die Übertragung der Kanalmeßsequenz 'n' mit einer Phasendrehung von 180°. Weitere detektierbare Phasendrehungen können entsprechend gewählt werden und sind im Umfang der Erfindung offenbart.

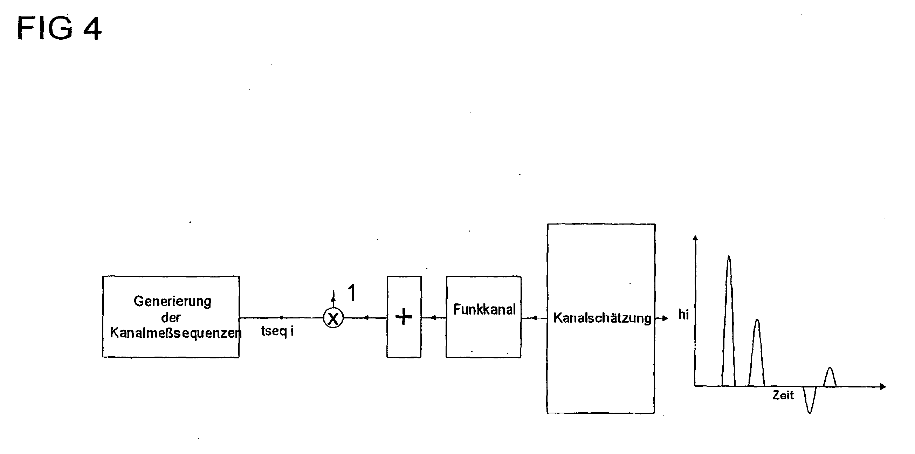

Die FIG 4 zeigt eine bekannte Übertragung einer Kanalmeßsequenz $tseq_i$ mit einer, beispielsweise normierten, Leistung 1, die nach einer Übertragung über einen Funkkanal und einer Kanalschätzung eine beispielhaft dargestellte geschätzte Kanalimpulsantwort $h_i$ hervorruft.

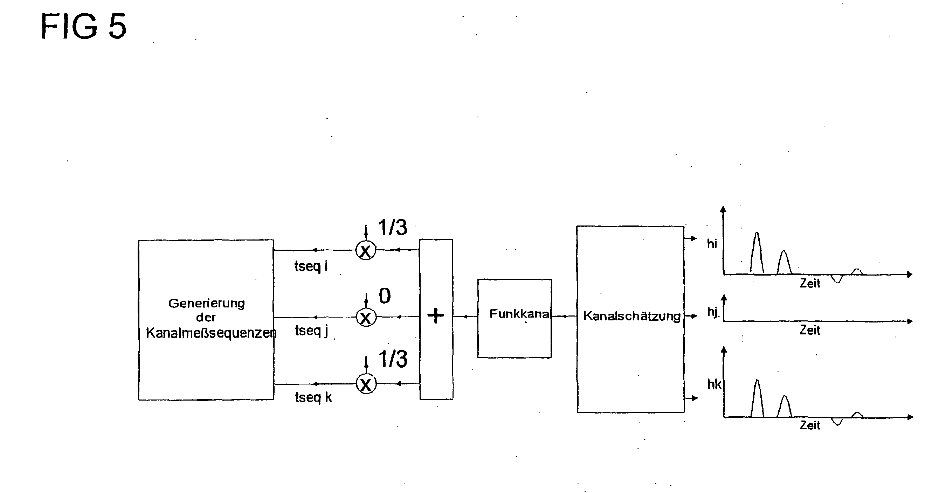

Die FIG 5 zeigt eine Übertragung einer Kombination von Kanalmeßsequenzen entsprechend einer Kodierung gemäß der FIG 3. Drei Kanalmeßsequenzen $tseq_i$, $tseq_j$ und $tseq_k$ werden mit einer, beispielsweise normierten, Leistung 1/3 zur Signalisierung des Codewortes (1,0,1) übertragen, und bewirken entsprechend dargestellte geschätzte Kanalimpulsantworten $h_i$, $h_j$ und $h_k$.

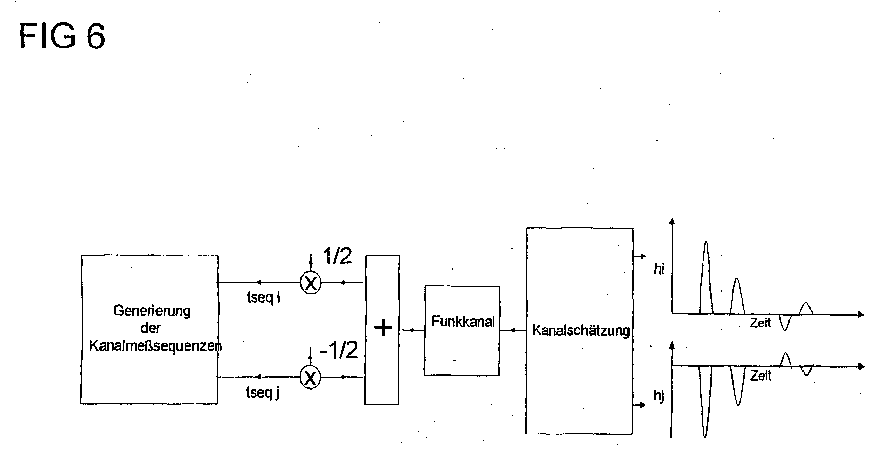

Die FIG 6 zeigt schließlich eine Übertragung zweier Kanalmeßsequenzen $tseq_i$ und $tseq_j$ mit einer, beispielsweise normierten, Leistung 1/2 zur Signalisierung des Codewortes (1,-1). Die Kanalmeßsequenzen bewirken geschätzte Kanalimpulsantworten $h_i$ und $h_j$.

**Patentansprüche**

1. Verfahren zur Signalisierung von Informationen in einem Funk-Kommunikationssystem,
   **dadurch gekennzeichnet,**
   **dass** von einer ersten Funkstation (NB) des Funk-Kommunikationssystems Informationen codiert durch eine Auswahl und/oder Anzahl von Kanalmeßsequenzen (tseq) zu einer zweiten Funkstation (UE) signalisiert werden, wobei die Kanalmeßsequenzen (tseq) zusätzlich durch eine Phaseninformation unterscheidbar sind.

2. Verfahren nach Anspruch 1,
   **dadurch gekennzeichnet,**
   **dass** die erste Funkstation (NB) als eine Basisstation (NB) und die zweite Funkstation (UE) als eine mobile oder ortsfeste Teilnehmerstation des Funk-Kommunikationssystems ausgestaltet sind.

3. Verfahren nach Anspruch 1 oder 2,
   **dadurch gekennzeichnet,**
   **dass** mittels der Auswahl, Anzahl und/oder Phaseninformation der von der ersten Funkstation (NB) gesendeten Kanalmeßsequenzen (tseq) eine aktuelle Anzahl von in einer Funkzelle (Z) verwendeten Spreizcodes (c) signalisiert wird.

4. Verfahren nach Anspruch 1 oder 2,
   **dadurch gekennzeichnet,**
   **dass** mittels der Auswahl, Anzahl und/oder Phaseninformation der von der ersten Funkstation (NB) gesendeten Kanalmeßsequenzen (tseq) eine Teilnehmeridentifikation signalisiert wird.

5. Verfahren nach Anspruch 1 oder 2,
   **dadurch gekennzeichnet,**
   **dass** mittels der Auswahl, Anzahl und/oder Phaseninformation der von der ersten Funkstation (NB) gesendeten Kanalmeßsequenzen (tseq) eine Schrittweite ($\Delta$P) einer Sendeleistungsänderung der Teilnehmerstation (UE) signalisiert wird.

6. Verfahren nach einem vorhergehenden Anspruch,
   **dadurch gekennzeichnet,**
   **dass** die Informationen verschiedene Werte aufweisen können und dass jeweils einer Auswahl, Anzahl und/oder Phaseninformation der Kanalmeßsequenzen (tseq) ein oder mehrere Werte der Informationen zugeordnet und zu der zweiten Funkstation (UE) signalisiert werden.

**7.** Verfahren nach Anspruch 6,
**dadurch gekennzeichnet**
**dass** eine Differenz der Werte der zugeordneten Informationen maximal ist.

**8.** Verfahren nach Anspruch 6 oder 7,
**dadurch gekennzeichnet**
**dass** die Differenz der Werte der zugeordneten Informationen konstant ist.

**9.** Verfahren nach einem der Ansprüche 6 bis 8,
**dadurch gekennzeichnet,**
**dass** ein oder mehrere Werte der Anzahl der in der Funkzelle (Z) zugeteilten Spreizcodes (c) der Auswahl, Anzahl und/oder Phaseninformation der Kanalmeßsequenzen (tseq) zugeordnet und zu der zweiten Funkstation (UE) signalisiert werden.

**10.** Verfahren nach einem vorhergehenden Anspruch,
**dadurch gekennzeichnet,**
**dass** zur Codierung durch die Auswahl, Anzahl und/oder Phaseninformation der Kanalmeßsequenzen (tseq) Kanalcodierungsverfahren eingesetzt werden.

**11.** Verfahren nach einem vorhergehenden Anspruch,
**dadurch gekennzeichnet**,
die Kanalmeßsequenzen (tseq) durch eine zyklische Ableitung von einer oder mehreren Grundsequenzen gebildet werden.

**12.** Verfahren nach einem vorhergehenden Anspruch,
**dadurch gekennzeichnet,**
**dass** die Kodierung der Informationen mittels einer oder mehrerer Kanalmeßsequenzen (tseq) entsprechend einer binären Kodierung durchgeführt wird.

**13.** Verfahren nach einem vorhergehenden Anspruch,
**dadurch gekennzeichnet,**
**dass** die Funkschnittstelle des Funk-Kommunikationssystems gemäß einem TDD-Verfahren organisiert ist.

**14.** Verfahren nach einem vorhergehenden Anspruch,
**dadurch gekennzeichnet,**
**dass** die Funkschnittstelle gemäß einem CDMA-Teilnehmerseparierungsverfahren organisiert ist.

**15.** Funkstation (NB, UE) eines Funk-Kommunikationssystems zur Durchführung des Verfahrens nach Anspruch 1, wobei das Funk-Kommunikationssystem als ein Mobilfunksystem oder als ein drahtloses Teilnehmeranschlußsystem verwirklicht ist.

**16.** Funkstation (NB, UE) nach Anspruch 15,
die als eine Basisstation oder als eine mobile oder ortsfeste Teilnehmerstation ausgestaltet ist.

**Claims**

**1.** Method for signalling information in a radio communication system
**characterised in that**
information coded by means of a selection and/or number of channel-measuring sequences (tseq) is signalled from a first radio station (NB) of the radio communication system to a second radio station (UE), with the channel-measuring sequences (tseq) being additionally distinguishable by means of phase information.

**2.** Method according to Claim 1
**characterised in that**
the first radio station (NB) is embodied as a base station (NB) and the second radio station (UE) as a mobile or fixed subscriber station of the radio communication system.

3. Method according to Claim 1 or 2
   **characterised in that**
   a current number of spread codes (c) employed in a radio cell (Z) is signalled by means of the selection, number and/or phase information of channel-measuring sequences (tseq) transmitted by the first radio station (NB).

4. Method according to Claim 1 or 2
   **characterised in that**
   a subscriber identification is signalled by means of the selection, number and/or phase information of channel-measuring sequences (tseq) transmitted by the first radio station (NB).

5. Method according to Claim 1 or 2
   **characterised in that**
   a step size (ΔP) of a change in transmitter power of the subscriber station (UE) is signalled by means of the selection, number and/or phase information of channel-measuring sequences (tseq) transmitted by the first radio station (NB).

6. Method according to a preceding Claim
   **characterised in that**
   the information can have different values and that one or more values of the information is/are in each case assigned to a selection, number and/or phase information of the channel-measuring sequences (tseq) and signalled to the second radio station (UE).

7. Method according to Claim 6
   **characterised in that**
   a difference between the values of the assigned information is a maximum.

8. Method according to Claim 6 or 7
   **characterised in that**
   the difference between the values of the assigned information is constant.

9. Method according to one of the Claims 6 to 8
   **characterised in that**
   one or more values of the number of the spread codes (c) assigned in the radio cell (Z) is/are assigned to the selection, number and/or phase information of the channel-measuring sequences (tseq) and signalled to the second radio station (UE).

10. Method according to a preceding Claim
    **characterised in that**
    channel-coding methods are employed for coding by means of the selection, number and/or phase information of the channel-measuring sequences (tseq).

11. Method according to a preceding Claim
    **characterised in that**
    the channel-measuring sequences (tseq) are formed by means of cyclical derivation from one or more basic sequences.

12. Method according to a preceding Claim
    **characterised in that**
    coding of the information by means of one or more channel-measuring sequences (tseq) is performed according to a binary coding method.

13. Method according to a preceding Claim
    **characterised in that**
    the radio interface of the radio communication system is organised in accordance with a TDD method.

14. Method according to a preceding Claim
    **characterised in that**
    the radio interface is organised in accordance with a CDMA subscriber separation system.

**15.** Radio station (NB, UE) of a radio communication system for implementing the method according to Claim 1, with the radio communication system being realized in the form of a mobile radio system or a wireless subscriber connection system.

**16.** Radio station (NB, UE) according to Claim 15
which is embodied as a base station or as a mobile or fixed subscriber station.


**Revendications**

**1.** Procédé de signalisation d'informations dans un système de radiocommunication,
**caractérisé en ce que**
des informations, codées au moyen d'une sélection et/ou d'un nombre de séquences de mesure de canal (tseq), sont signalées par une première station radio (NB) du système de radiocommunication à une deuxième station radio (DE), les séquences de mesure de canal (tseq) étant discernables en supplément par une information de phase.

**2.** Procédé selon la revendication 1,
**caractérisé en ce que**
la première station radio (NB) est exécutée comme une station de base (NB) et la deuxième station radio (UE) est exécutée comme une station d'abonné, mobile ou stationnaire, du système de radiocommunication.

**3.** Procédé selon la revendication 1 ou 2,
**caractérisé en ce que**
un nombre actuel de codes d'étalement (c) utilisés dans une cellule radio (Z) est signalé au moyen de la sélection, du nombre et/ou de l'information de phase des séquences de mesure de canal (tseq) émises par la première station radio (NB).

**4.** Procédé selon la revendication 1 ou 2,
**caractérisé en ce que**
une identification d'abonné est signalée au moyen de la sélection, du nombre et/ou de l'information de phase des séquences de mesure de canal (tseq) émises par la première station radio (NB).

**5.** Procédé selon la revendication 1 ou 2,
**caractérisé en ce que**
un pas de progression (ΔP) d'une modification de puissance d'émission de la station d'abonnés (UE) est signalée au moyen de la sélection, du nombre et/ou de l'information de phase des séquences de mesure de canal (tseq) émises par la première station radio (NB).

**6.** Procédé se/on l'une quelconque des revendications précédentes,
**caractérisé en ce que**
les informations peuvent présenter différentes valeurs et qu'une ou plusieurs valeurs des informations sont affectées respectivement à une sélection, à un nombre et/ou à une information de phase des séquences de mesure de canal (tseq) et sont signalées à la deuxième station radio (UE).

**7.** Procédé selon la revendication 6,
**caractérisé en ce que**
une différence des valeurs des informations affectées est maximale.

**8.** Procédé selon la revendication 6 ou 7,
**caractérisé en ce que**
la différence des valeurs des informations affectées est constante.

**9.** Procédé selon l'une quelconque des revendications 6 à 8,
**caractérisé en ce que**
une ou plusieurs valeurs du nombre de codes d'étalement (c) affectés dans la cellule radio (Z) sont affectées à la sélection, au nombre et/ou à l'information de phase des séquences de mesure de canal (tseq) et sont signalées à la deuxième station radio (UE).

**10.** Procédé selon l'une quelconque des revendications précédentes,
**caractérisé en ce que**
des procédés de codage de canal sont utilisés pour le codage au moyen de la sélection, du nombre et/ou de l'information de phase des séquences de mesure de canal (tseq).

**11.** Procédé selon l'une quelconque des revendications précédentes,
**caractérisé en ce que**
les séquences de mesure de canal (tseq) sont formées par une dérivation cyclique d'une ou de plusieurs séquences de base.

**12.** Procédé selon l'une quelconque des revendications précédentes,
**caractérisé en ce que**
le codage des informations est réalisé au moyen d'une ou de plusieurs séquences de mesure de canal (tseq) de manière correspondant à un codage binaire.

**13.** Procédé selon l'une quelconque des revendications précédentes,
**caractérisé en ce que**
l'interface radio du système de radiocommunication est organisée selon un procédé TDD.

**14.** Procédé selon l'une quelconque des revendications précédentes,
**caractérisé en ce que**
l'interface radio du système de radiocommunication est organisée selon un procédé d'accès multiple par code de répartition CDMA.

**15.** Station radio (NB, UE) d'un système de radiocommunication pour la réalisation du procédé selon la revendication 1, le système de radiocommunication étant réalisé comme un système de radiocommunication mobile ou comme un système sans fil de raccordement d'abonné.

**16.** Station radio (NB, UE) selon la revendication 15,
qui est exécutée comme une station de base ou comme une station d'abonné mobile ou stationnaire.

FIG 1

# FIG 2

EP 1 295 503 B1

FIG 3

| n | c | tseq 1 | tseq 2 | tseq 3 | tseq 4 |
|---|---|---|---|---|---|
| 1 | c1 | X | | | |
| 2 | c1,c2 | | X | | |
| 3 | c1,c2,c3 | X | X | | |
| 4 | c1,c2,c3,c4 | | | X | |
| 5 | c1,c2,c3,c4,c5 | X | | X | |
| 6 | c1,c2,c3,c4,c5,c6 | | X | X | |
| 7 | c1,c2,c3,c4,c5,c6,c7 | X | X | X | |
| 8 | c1,c2,c3,c4,c5,c6,c7,c8 | | | | X |
| 9 | c1,c2,c3,c4,c5,c6,c7,c8,c9 | X | | | X |
| 10 | c1,c2,c3,c4,c5,c6,c7,c8,c9,c10 | | X | | X |
| 11 | c1,c2,c3,c4,c5,c6,c7,c8,c9,c10,c11 | X | X | | X |
| 12 | c1,c2,c3,c4,c5,c6,c7,c8,c9,c10,c11,c12 | | | X | X |
| 13 | c1,c2,c3,c4,c5,c6,c7,c8,c9,c10,c11,c12, c13 | X | | X | X |
| 14 | c1,c2,c3,c4,c5,c6,c7,c8,c9,c10,c11,c12, c13,c14 | | X | X | X |
| 15 | c1,c2,c3,c4,c5,c6,c7,c8,c9,c10,c11,c12, c13,c14,c15 | X | X | X | X |

EP 1 295 503 B1

## FIG 4

Generierung der Kanalmeßsequenzen

tseq i

1

Funkkanal

Kanalschätzung

hi

Zeit

EP 1 295 503 B1

# FIG 5

Generierung der Kanalmeßsequenzen

tseq i    1/3

tseq j    0

tseq k    1/3

+

Funkkanal

Kanalschätzung

hi    Zeit

hj    Zeit

hk    Zeit

EP 1 295 503 B1

FIG 6

Generierung der Kanalmeßsequenzen

tseq i

tseq j

× 1/2

× -1/2

+

Funkkanal

Kanalschätzung

hi

hj

Zeit

Zeit

17